# EUROPEAN PATENT APPLICATION

(11) **EP 4 290 611 A1**
(43) Date of publication of application: **13.12.2023**
(21) Application number: 21927236.6
(22) Date of filing: 26.02.2021
(51) Int. Cl.: H01M 4/38, H01M 4/36

(54) **POROUS NEGATIVE ELECTRODE ACTIVE MATERIAL AND MANUFACTURING METHOD THEREFOR**

(71) Applicant: Shanghai Shanshan Tech Co., Ltd., Pudong New Area Shanghai 201209 (CN)
(72) Inventor: MA, Fei, Shanghai 201209 (CN); WEI, Liangqin, Shanghai 201209 (CN); WU, Zhihong, Shanghai 201209 (CN); LI, Fengfeng, Shanghai 201209 (CN)
(74) Representative: karo IP
(86) International application number: PCT/CN2021/078017
(87) International publication number: WO 2022/178798

(57) **Abstract**

The application provides a porous negative electrode active material and a preparation method thereof, wherein the porous negative electrode active material includes: a first structure including 0-4 valence silicon elements and metal doping elements, wherein the mass percentage of the silicon elements is not less than 40%, and the mass percentage of the metal doping elements is 1%-15%; the first structure includes a porous structure, and the porous structure includes micropores with a pore diameter of less than 2nm and mesopores with a pore diameter of 2nm-50nm; the first structure further includes silicon grains, and the size of the silicon grains is no more than 10nm; the adsorption-desorption curve of the porous negative electrode active material has a hysteresis loop, the relative pressure corresponding to the hysteresis loop is 0.4-1, and the adsorption capacity is 5cm³/g-25cm³/g.

## Description

### TECHNICAL FIELD

The disclosure relates to the field of lithium ion batteries, in particular to a porous negative electrode active material and a preparation method thereof.

### BACKGROUND

Although silicon-based materials have significant advantages in lithium storage capacity, at present, their rate performance is still inferior to that of traditional graphite negative electrode in high-voltage solid system. Therefore, it is still necessary to improve the dynamic performance of silicon-based materials to meet the increasing requirements of fast charging of batteries.

In order to improve the fast charging capacity of the battery, a channel structure was designed in the negative electrode material. Although it may make the battery have good fast charging ability, it accelerates the cycle failure of the battery. At the same time, in the prior art, when preparing porous negative electrode materials, the porous structure is mostly obtained by acid treatment from silicon oxide compounds, which has the problems of strong acid corrosiveness, high cost, drastic reduction of bulk density after pore formation, deterioration of cycle performance and the like. Therefore, this method is difficult to apply in a large scale.

### BRIEF SUMMARY

The disclosure provides a porous negative electrode active material and a preparation method thereof, and the method makes the negative electrode active materials have a better pore characteristic structure, improves the fast charging capacity and cycle characteristics of the battery, and reduces the expansion of the battery in the cycle process.

According to some aspects of the present disclosure, a porous negative electrode active material is provided. The porous negative electrode active material includes: a first structure including 0-4 valence silicon elements and metal doping elements, where the mass percentage of the silicon elements is not less than 40%, and the mass percentage of the metal doping elements is 1%-15%; the first structure includes a porous structure, and the porous structure includes micropores with a pore diameter of less than 2nm and mesopores with a pore diameter of 2nm-50nm; the first structure further includes silicon grains, and the size of the silicon grains is no more than 10nm; and the adsorption-desorption curve of the porous negative electrode active material has a hysteresis loop, the relative pressure corresponding to the hysteresis loop is 0.4-1, and the adsorption capacity is 5cm³/g-25cm³/g.

In some embodiments of the present application, wherein, in the first structure, 0<m_{Si(tetravalent)}/m_{Si(zerovalent)}≤1, where the m_{Si(tetravalent)} is the mass of tetravalent silicon element, and the m_{Si(zerovalent)} is the mass of zerovalent silicon element.

In some embodiments of the present application, wherein the metal doping elements comprise at least one of Li, Na, Ge, Mg, Ca, Al and Be.

In some embodiments of the present application, the porous negative electrode active material further comprises a second structure coated on the surface of the first structure, where the second structure comprises at least one of amorphous carbon or graphitized carbon, and the mass of carbon element accounts for not less than 80% of the total mass of the second structure.

In some embodiments of the present application, wherein the thickness of the second structure is 0nm-40nm, and the average particle diameter of the porous negative electrode active material is 0.1µm-18µm.

According to some aspects of the present disclosure, a preparation method for a porous negative electrode active material is provided. The method includes: providing a mixture, where the mixture includes a simple substance state of silicon, a tetravalent oxidation state of silicon and a metal doping element, the mass percentage of the silicon element is not less than 40%, and the mass percentage of the metal doping element is 1%-15%; melting the mixture, and then cooling the mixture to room temperature at a cooling rate of no less than 20°C/min to obtain a first structure; the first structure includes a 0-4 valence silicon element and a metal doping element; the first structure includes a porous structure, where the porous structure includes micropores with a pore diameter of less than 2nm and mesopores with a pore diameter of 2nm to 50nm; the first structure further includes silicon grains, and the size of the silicon grains is no more than 10nm; the adsorption-desorption curve of the porous negative electrode active material has a hysteresis loop, the relative pressure corresponding to the hysteresis loop is 0.4-1, and the adsorption capacity is 5cm³/g-25cm³/g.

In some embodiments of the present application, wherein, in the first structure, 0≤m_{Si(tetravalent)}/m_{Si(Zerovalent)}≤1, where the m_{Si(tetravalent)} is the mass of tetravalent silicon element, and the m_{Si(zerovalent)} is the mass of zerovalent silicon element.

In some embodiments of the present application,wherein the metal doping elements comprise at least one of Li, Na, Ge, Mg, Ca, Al and Be.

In some embodiments of the present application,the preparation method further comprises: coating a second structure on the surface of the first structure, where the second structure comprises at least one of amorphous carbon or graphitized carbon, and the mass of carbon element accounts for not less than 80% of the total mass of the second structure.

According to some aspects of the present disclosure, a preparation method for a porous negative electrode active material is provided. The method includes: providing a mixture, where the mixture includes a simple substance state of silicon, a tetravalent oxidation state of silicon and a metal doping element, the mass percentage of the silicon element is not less than 40%, and the mass percentage of the metal doping element is 1%-15%; heating the mixture to a first temperature, and then cooling the mixture to a second temperature under a specific vacuum degree, where the temperature difference between the first temperature and the second temperature is not less than 300°C, so as to obtain a first structure; the first structure includes a 0-4 valence silicon element and a metal doping element; the first structure includes a porous structure, where the porous structure includes micropores with a pore diameter of less than 2nm and mesopores with a pore diameter of 2nm to 50nm; the first structure further includes silicon grains, and the size of the silicon grains is no more than 10nm; and the adsorption-desorption curve of the porous negative electrode active material has a hysteresis loop, the relative pressure corresponding to the hysteresis loop is 0.4-1, and the adsorption capacity is 5cm³/g-25cm³/g.

In some embodiments of the present application, wherein the first temperature is 1000-1400°C, the second temperature is 400-900°C, and the specific vacuum degree is 10⁻³Pa-10²Pa.

In some embodiments of the present application, wherein, in the first structure, 0≤m_{Si(tetravalent)}/m_{Si(zerovalent)}≤1, where the m_{Si(tetravalent)} is the mass of tetravalent silicon element, and the m_{Si(zerovalent)} is the mass of zerovalent silicon element.

In some embodiments of the present application, wherein, the metal doping elements comprise at least one of Li, Na, Ge, Mg, Ca, Al and Be.

In some embodiments of the present application, the preparation method further comprises: coating a second structure on the surface of the first structure, where the second structure comprises at least one of amorphous carbon or graphitized carbon, and the mass of carbon element accounts for not less than 80% of the total mass of the second structure.

According to the technical scheme of the disclosure, the porous negative electrode active material includes a first structure, and the first structure simultaneously includes micropores and mesopores, where the micropores increase diffusion channels, which is beneficial to the improvement of multiplying power, the mesopores may alleviate the cycle performance attenuation caused by volume expansion, which is beneficial to the cycle stability. Meanwhile, the first structure also includes silicon grains, and the size of the silicon grains is not more than 10nm, so when the porous negative electrode active material is used in the negative electrode, the kinetic properties of lithium is better, thereby improving the fast charging capacity and cycle performance of the battery.

According to the preparation method of the porous negative electrode active material of the technical scheme, the raw materials include the simple substance state of silicon, the tetravalent oxidation state of silicon and metal doping elements, where the mass percentage of the silicon element is not less than 40%, and the mass percentage of the metal doping elements is 1%-15%. And the preparation process is regulated and controlled to enable the prepared porous negative electrode active material to have a better pore characteristic structure, thereby improve the fast charging capacity and cycle characteristics of the battery, and reduce the expansion of the battery in the cycle process.

### BRIEF DESCRIPTION OF THE DRAWINGS

The following drawings describe the exemplary embodiment disclosed in this application in detail. The same reference numerals indicate similar structures in several views of the drawings. Those skilled in the art may understand that these embodiments are non-limiting and exemplary embodiments. The drawings are only for the purpose of illustration and description, and are not intended to limit the scope of this application. Other embodiments may also fulfill the inventive intent of this application.
FIG. 1 is a pore size distribution diagram of negative electrode active materials prepared in example 1, example 2 and comparative example 1 of this application;
FIG. 2 shows the adsorption-desorption curves of negative electrode active materials prepared in example 1, example 2 and comparative example 1 of this application.

### DETAILED DESCRIPTION

The following description provides the specific disclosure scenarios and requirements of this disclosure in order to enable those skilled in the art to make or use the contents of this disclosure. Various modifications to the disclosed embodiments will be apparent to those skilled in the art, and the general principles defined herein may be applied to other embodiments and s without departing from the scope of this disclosure. Therefore, this disclosure is not limited to the illustrated embodiments, but is to be accorded the widest scope consistent with the claims.

The technical scheme of the present application will be explained in detail with reference to the following examples and drawings.

The embodiment of the application provides a porous negative electrode active material. The porous negative electrode active material includes a first structure including 0-4 valence silicon elements and metal doping elements. The existence of the metal doping element may make the whole material appear electrically neutral. The metal doping elements comprise at least one of Li, Na, Ge, Mg, Ca, Al and Be. The metal doping elements may exist in atomic state or ionic state in the porous negative electrode active material, such as elemental Mg, elemental Al, etc. Otherwise, the metal doping elements may be combined with elements with electron-accepting ability to form metal oxides or metal salts, such as MgO, Na₂O, CaO, Na₃PO₄, MgSO₃, etc. The metal doping elements may also be combined with silicon elements with valence of 0-4 to form silicate, such as MgSiO₃, CaSiO₃, Li₂SiO₃ or Na₂SiO₃. Meanwhile, silicate formed by combining the metal doping elements with silicon elements with valence of 0-4 may form a pore structure when stacked.

The doping amount of the metal doping element is closely related to the first coulombic efficiency of the battery, the cycle performance and the gram capacity of the negative electrode material. With the increase of the doping amount of the metal doping element, the first coulombic efficiency of the battery is increased as well, but the cycle performance of the battery shows a trend of first increasing and then decreasing. And with the increase of the amount of the metal doping element, the content of active lithium absorbed per unit mass decreases. Therefore, by controlling the doping amount of metal doping elements, the characteristics of porous negative electrode active material embedded in active lithium at high temperature may be changed, and the cycle performance and the first coulombic efficiency of the battery may also be improved. In addition, during the research and development process, it was found that the doping amount of the metal doping elements affected the packing morphology of silicate. When the mass percentage of doping elements is 1%-15%, the stacked morphology of silicate has better pore structure characteristics.

In the embodiment of the present application, the mass percentage of the silicon elements is not less than 40% of the total mass of the first structure. And 0≤m_{Si(tetravalent)}/m_{Si(zerovalent)}≤1, where the m_{Si(tetravalent)} is the mass of tetravalent silicon element, and the m_{Si}(zerovalent) is the mass of zerovalent silicon element. Silicon elements with valency of 0-4 may be silicon in simple substance state, silicon oxide SiOx (0 < x < 2) and silicate, and the general formula of the silicate is RySiO₃, where 1≤y≤2, and R is the doping element. The content of silicon and metal doped elements may be realized by adjusting the relative content of silicon, silicon oxide and silicate contained in the first structure.

The first structure includes a porous structure, and the porous structure includes micropores and mesopores, where the existence of the micropores enables the negative electrode material to have more diffusion channels, which is beneficial to the improvement of multiplying power, while the mesopores may alleviate the cycle performance attenuation caused by volume expansion, which is beneficial to the improvement of cycle stability. The pore diameter of the micropores is less than 2nm, such as 0.2nm, 0.5nm, 0.8nm, 1nm, 1.5nm, etc., and the pore diameter of the mesopores is between 2nm and 50nm, such as 2nm, 5nm, 10nm, 15nm, 20nm, 30nm, 35nm, 40nm, 45nm, etc. The first structure also includes silicon grains, and the size of the silicon grains is not more than 10nm, the small size silicon grains have better kinetic properties when combined with lithium, thereby improving the fast charging capacity and cycle performance of the battery.

Because the first structure has a porous structure, there is a hysteresis loop in the adsorption-desorption curve of the porous negative electrode active material, and the relative pressure corresponding to the hysteresis loop is 0.4-1, and the adsorption capacity is 5cm³/g-25cm³/g. When the hysteresis loop of adsorption-desorption curve of porous negative electrode active material is in this range, it has good cycle performance and fast charging ability when applied to batteries. This is because the porous negative electrode active material has a pore channel structure, which is conducive to lithium ion diffusion and electrolyte infiltration. The formed solid electrolyte interface (SEI) has a stable structure, which may prevent the battery from failing in the cycle process. At the same time, diversified lithium ion diffusion channels are conducive to improving the fast charging performance. If the adsorption capacity is too small, that is, the pore volume is small, the diffusion path will be insufficient, which will affect the kinetics. When the adsorption capacity is too large, that is, the pore volume is too large, the electrolyte will decompose too much and the impedance will increase, which will weaken the fast charging performance and accelerate the cyclic attenuation. The porous negative electrode active material has a high specific surface area because of its porous structure. The specific surface area of the porous negative electrode active material of this application is 2m²/g to 15m²/g.

In some embodiments, the porous negative electrode active material further includes a second structure coated on the surface of the first structure, where the second structure includes at least one of amorphous carbon or graphitized carbon, and the mass of carbon element accounts for not less than 80% of the total mass of the second structure. The thickness of the second structure is 0nm to 40nm for example, and the average particle diameter of the porous negative electrode active material is 0.1µm to 18µm. When the thickness of the second structure is 0nm, that is, the porous negative electrode active material only includes the first structure, the second structure may improve the conductivity of the porous negative electrode active material.

In some embodiments, the second structure may be a single layer structure, for example, the second structure may be a single layer structure including amorphous carbon, a single layer structure including graphitized carbon, or a single layer structure including both amorphous carbon and graphitized carbon. In other embodiments, the second structure may be a multilayer structure, for example, the second structure may include an amorphous carbon layer and a graphitized carbon layer, and the number and coating order of the amorphous carbon layer and the graphitized carbon layer are not limited. The "coating" described in this embodiment may be partially coated or completely coated, and the degree of coating is different according to the different preparation processes of the porous negative electrode active material.

The embodiment of the application also provides a preparation method for a porous negative electrode active material. The method includes:

Step S1: providing a mixture, where the mixture includes a simple substance state of silicon, a tetravalent oxidation state of silicon and a metal doping element, the metal doping elements include at least one of Li, Na, Ge, Mg, Ca, Al and Be.

The simple substance state of the silicon is, for example, polysilicon. The tetravalent oxidation state of the silicon is, for example, silica. And the raw material containing silica is, for example, quartz. The tetravalent oxidation state of silicon may also be silicate, such as a compound with the general formula of RySiO₃, where 1≤y≤2, and R is an element of main group I, II and III, such as Li, Na, Mg, Ca, etc.

The metal doping elements may be derived from metal simple substance, metal oxide, metal hydroxide or metal salt, for example, Mg simple substance, Li simple substance, Ca simple substance, Ge simple substance, MgO, Na₂O, CaO, Na₃PO₄, MgSO₄, LiOH, Li₂CO₃, MgCO₃, MgSiO₃, CaSiO₃, Li₂SiO₃ or Na₂SiO₃. In some embodiments of the present application, the raw materials forming the first mixture include Si simple substance, silica, and Mg simple substance. In other embodiments of the present application, the raw materials include elemental Si simple substance, silica and lithium hydroxide.

In the mixture, the mass percentage of the silicon element is not less than 40%, and the mass percentage of the metal doping element is 1%-15%. The component ratio of each raw material is controlled to enable that in the first structure, 0≤m_{Si(tetravalent)}/m_{Si(zerovalent)}≤1, where the m_{Si(tetravalent)} is the mass of tetravalent silicon element, and the m_{Si}(zerovalent) is the mass of zerovalent silicon element.

Step S2: melting the mixture, and then cooling the mixture to room temperature to obtain a first structure. In some embodiments, the mixture may be heated to the molten state under the protection of non-oxidizing gas, such as inert gas, such as helium, neon, argon, etc. The temperature at which the mixture is heated to the molten state is not limited, but determined according to the actual situation. It should be noted that the cooling rate should be strictly controlled to not be lower than 20°C/min to enable the formed first structure include porous structure. The porous structure includes both micropores with a pore diameter of less than 2nm and mesopores with a pore diameter of 2-50 nm. Meanwhile, the first structure includes silicon grains with a size of no more than 10nm. The adsorption-desorption curve of the prepared porous negative electrode active material has a hysteresis loop, and the relative pressure corresponding to the hysteresis loop is 0.4-1, and the adsorption capacity is 5m³/g-25m³/g. Therefore, the porous negative electrode active material obtained by the preparation method provided by the embodiment of the application has a better pore characteristic structure, which may effectively improve the fast charging capacity and cycle characteristics of the battery and reduce the expansion of the battery in the cycle process.

In some embodiments of the present application, the preparation method of the porous negative electrode active material further includes: coating a second structure on the surface of the first structure, where the second structure comprises at least one of amorphous carbon or graphitized carbon, and the mass of carbon element accounts for not less than 80% of the total mass of the second structure.

The method of forming the second structure may include: decomposing carbon source substances in a non-oxidizing atmosphere to obtain decomposition products. The Raman spectrum Id/Ig corresponding to the decomposition product is less than 0.5, and the conductivity is more than 10²S·m⁻¹. The carbon source substances include more than one of gaseous carbon source substances, vaporized carbon source substances or atomized carbon source substances. The gaseous carbon source substances include hydrocarbons and aldehydes which are gaseous at room temperature, and the gaseous carbon source substances include methane, ethane, ethylene, acetylene, propane and propylene. The vaporized carbon source substances is a liquid at room temperature, a gaseous carbon-containing substances above room temperature but below the temperature of the pre-decomposition zone, and the vaporized carbon source substances include n-hexane, ethanol and benzene. The atomized carbon source substances are substances which is difficult to evaporate by heating, and may be made into small droplets by an atomizing device, for example,the substances which are liquid at a temperature lower than the pre-decomposition zone, and the atomized carbon source substances include polyethylene and polypropylene. The method of forming the second structure further include: the first structure after pulverization is subjected to deposition coating reaction with the decomposition product, and an amorphous carbon coating or graphitized carbon coating or a composite layer including the amorphous carbon coating and graphitized carbon coating is formed on the surface of the first structure after pulverization.

Nitrogen-containing substances may also be introduced during the deposition coating reaction. The nitrogen-containing substances include at least one of NH₃, melamine, acetonitrile, aniline or butylamine. Introducing the nitrogen-containing substances may obtain amorphous carbon coating and/or graphitized carbon coating doped with nitrogen atoms. The amorphous carbon coating and/or graphitized carbon coating doped with nitrogen atoms may further improve the conductivity of the material, thereby reducing the internal resistance of the battery and further ensuring the high-current charging and discharging capacity of the battery.

According to the preparation method of the porous negative electrode active material described in the embodiment of the application, by controlling the relative ratio of silicon and doping elements in the mixture, and cooling the molten mixture to room temperature at a cooling rate of not less than 20°C/min, the obtained first structure has a porous structure, and the porous structure includes micropores with a pore diameter of less than 2nm and mesopores with a pore diameter of 2-50 nm, and the first structure also includes silicon grains with a size of not more than 10nm, hence the fast charging capacity and cycle of the battery may be effectively improved, the expansion of the battery in the cycle process is reduced as well.

The porous negative electrode active material formed by the preparation method described in the embodiment of the application has a hysteresis loop in its adsorption-desorption curve, and the relative pressure corresponding to the hysteresis loop is 0.4-1, and the adsorption capacity is 5m³/g-25m³/g.

The embodiment of the application also provides another preparation method for a porous negative electrode active material. The method includes:

Step S1: providing a mixture, where the mixture includes a simple substance state of silicon, a tetravalent oxidation state of silicon and a metal doping element.

The simple substance state of the silicon is, for example, polysilicon. The tetravalent oxidation state of the silicon is, for example, silica. And the raw material containing silica is, for example, quartz. The tetravalent oxidation state of silicon may also be silicate, such as a compound with the general formula of RySiO₃, where 1≤y≤2, and R is an element of main group I, II and III, such as Li, Na, Mg, Ca, etc.

The metal doping elements include at least one of Li, Na, Ge, Mg, Ca, Al and Be. The metal doping elements may be derived from metal simple substance, metal oxide, metal hydroxide or metal salt, for example, Mg simple substance, Li simple substance, Ca simple substance, Ge simple substance, MgO, Na₂O, CaO, Na₃PO₄, MgSO₄, LiOH, Li₂CO₃, MgCO₃, MgSiO₃, CaSiO₃, Li₂SiO₃ or Na₂SiO₃. In some embodiments of the present application, the raw materials forming the first mixture include Si simple substance, silica, and Mg simple substance. In other embodiments of the present application, the raw materials include elemental Si simple substance, silica and lithium hydroxide.

In the mixture, the mass percentage of the silicon element is not less than 40%, and the mass percentage of the metal doping element is 1%-15%. The component ratio of each raw material is controlled to enable that in the first structure, 0≤m_{Si(tetravalent)}/m_{Si(zerovalent)}≤1, where the m_{Si}(tetravalent) is the mass of tetravalent silicon element, and the m_{Si}(zerovalent) is the mass of zerovalent silicon element.

Step S2: heating the mixture to a first temperature, and then cooling the mixture to a second temperature under a specific vacuum degree, where the temperature difference between the first temperature and the second temperature is not less than 300°C, so as to obtain a first structure. The mixture may be heated to the first temperature under the protection of non-oxidizing gas, such as inert gas, such as helium, neon, argon, etc. The temperature difference between the first temperature and the second temperature should not be lower than 300°C to enable the formed first structure include porous structure. The porous structure includes both micropores with a pore diameter of less than 2nm and mesopores with a pore diameter of 2-50 nm. Meanwhile, the first structure includes silicon grains with a size of no more than 10nm. The adsorption-desorption curve of the prepared porous negative electrode active material has a hysteresis loop, and the relative pressure corresponding to the hysteresis loop is 0.4-1, and the adsorption capacity is 5m³/g-25m³/g.

In some embodiments of the present application, the first temperature is 1000-1400°C, the second temperature is 400-900°C, and the specific vacuum degree is 10⁻³Pa-10²Pa.

In some embodiments of the present application, the preparation method of the porous negative electrode active material further includes: coating a second structure on the surface of the first structure, where the second structure comprises at least one of amorphous carbon or graphitized carbon, and the mass of carbon element accounts for not less than 80% of the total mass of the second structure. The forming method of the second structure may refer to the foregoing contents, which will not be described here.

### Example 1

Providing a mixture, where the mixture includes silicon simple substance, silica and magnesium simple substance, where the mass percentage of silicon is 45% and the mass percentage of magnesium is 10%.

Heating the mixture to a molten state under the protection of argon, and then cooling it to room temperature at a cooling rate of 20°C/min to obtain the first structure.

Then, the first structure was pulverized, and an amorphous carbon coating layer and a graphitized carbon coating layer of 8nm were deposited on the surface of the formed powder. The performance parameters of the formed porous negative electrode active material are shown in Table 1.

### Example 2-5

Detailed process description may refer to Example 1, and specific process data and performance parameters of the formed porous negative electrode active material are shown in Table 1.

### Comparative example 1

Detailed process description may refer to Example 1, and specific process data and performance parameters of the formed porous negative electrode active material are shown in Table 1.

### Example 6

Providing a mixture, where the mixture includes silicon simple substance, silica and magnesium simple substance, where the mass percentage of silicon is 43% and the mass percentage of magnesium is 10%.

Heating the mixture to the first temperature under the protection of argon, and the vacuum degree is 10⁻¹Pa. Then cooling the mixture to the second temperature to obtain a first structure. The first temperature is 1000-1400°C, the second temperature is 400-900°C, and the temperature difference between the first temperature and the second temperature is controlled at 300°C.

Then, the first structure was pulverized, and an amorphous carbon coating layer and a graphitized carbon coating layer of 8nm were deposited on the surface of the formed powder. The performance parameters of the formed porous negative electrode active material are shown in Table 2.

### Example 7-10

Detailed process description may refer to Example 6, and specific process data and performance parameters of the formed porous negative electrode active material are shown in Table 2.

### Comparative example 2

Detailed process description may refer to Example 6, and specific process data and performance parameters of the formed porous negative electrode active material are shown in Table 2.

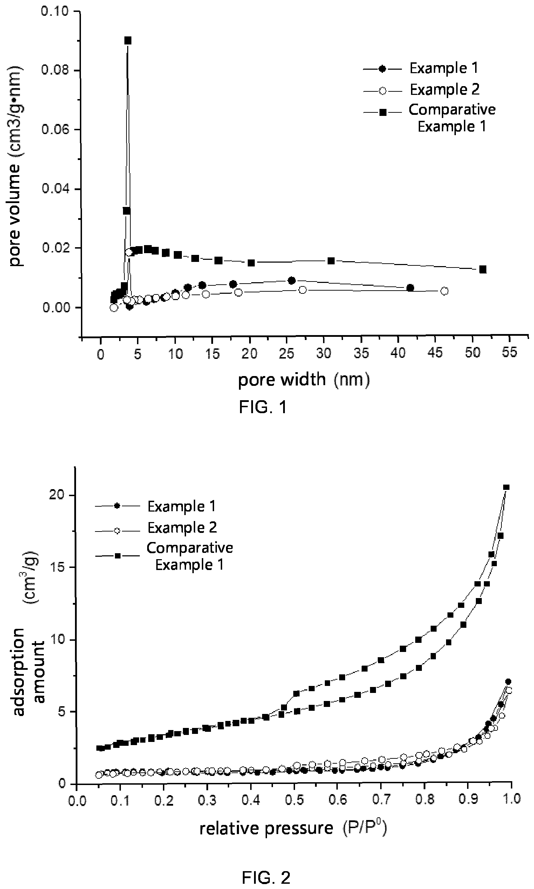

The negative electrode active materials obtained in examples 1-10 and comparative examples 1-2 were tested as follows:
(1)ASAP2020 of Mike Instruments Company is used as the test equipment. The pore size distribution and adsorption-desorption curves of example 1, example 2 and comparative example 1 were obtained, as shown in figures 1 and 2. The test method is as follows:
   Software version V3.04H;the adsorption medium is N₂; vacuum degassing pretreatment temperature: 150°C; pretreatment time: 1 hour; sample mass: 0.3±0.05g; adopt BJH model, select Faas correction, Halsey: t=3.54*[-5/ln (p/p^{o})]^{0.333}; pore size range: 0.1nm to 300.0000nm; adsorption factor: 0.95300nm;density conversion coefficient: 0.0015468; opening ratio at both ends: 0.00; according to the pore size distribution range obtained by BJH model desorption, the average pore size is automatically calculated, and the results are shown in Table 1 and Table 2. According to dV/dlog(w) Pore Volume desorbed by BJH model, the pore size distribution map is obtained.
(2)The negative electrode active materials prepared in examples 1-10 and comparative examples 1-2, PAA (polyacrylic acid binder) and SP (conductive carbon black) were mixed at a mass ratio of 80: 10: 10, and LiPF₆ of 1mol/L was used as electrolyte. All the materials were applied to the button battery system (model CR2430), and the following electrochemical performance tests were conducted at 25°C:

Cycle performance test: discharge the battery at constant current of 0.1C for 10mV, stand for 10min, and then discharge the battery at constant current of 0.02C to 5mV; stand for 10min, and then charge the battery to 1.5V at a constant current of 0.1C, so as to carry out a subsequent cycle. The test results are shown in Table 1 and Table 2.

Rate charging test: discharge the battery to 10mV at constant current of 0.1C, stand for 10min, and then discharge to 5mV at constant current of 0.02C; stand for 10min, and then charge the battery to 1.5V at a constant current of 0.1C; continue to discharge the battery to 5mV at a constant current of 0.2C, note the capacity as 0.2C, and then charge the battery to 1.5V at a constant current of 0.1C; then, discharge the battery to 5mV at 0.5C, 1.5C and 3.0C, and charge the battery to 1.5V at 0.1C, and compare the capacity ratio of 0.5C/1.5C/3.0C/0.2C. The test results are shown in Table 1 and Table 2.

Rate discharging test: discharge the battery tolOmV at constant current of 0.1C, stand for 10min, and then discharge the battery to 5mV at constant current of 0.02C; stand for 10min, and then charge the battery to 1.5V at a constant current of 0.2C; after that, discharge the battery to 5mV at 0.1C, and charge the battery to 1.5V at 0.5C, 1.5C and 3.0C respectively, and compare the capacity ratio of 0.5C/1.5C/3.0C/0.2C. The test results are shown in Table 1 and Table 2.

As shown in figs. 1 and 2, the pore volumes of Examples 1 and 2 are in the best range. In comparative example 1, the cooling rate is too slow, there are almost no micropores, and the average pore size of mesopores is 43nm, which is much larger than that of Examples 1 and 2. Therefore, the rate of charge and discharge and 50-week capacity retention rate of the battery in Comparative Example 1 are significantly lower than that in Examples 1 and 2.

Combined with Table 1 and Table 2, the porous negative electrode active materials obtained by the preparation method of the embodiment of this application all have micropores and mesopores with appropriate diameters and silicon grains with a size of less than 10nm. When the obtained porous negative electrode active materials are used as negative electrode materials of lithium batteries, they have good fast charging capacity and cycle performance, and may also greatly reduce the expansion rate of batteries.

**Table 1: Performance parameters of the formed porous negative electrode active material.**

| Table 1: Performance parameters of the formed porous negative electrode active material | | | | | | | | | | | | | | |
|---|---|---|---|---|---|---|---|---|---|---|---|---|---|---|
| | **Raw material of doping element R** | **Mass percentage of R (%)** | **Cooling rate (°C /min)** | **Average pore size of micropo res (nn)** | **Average pore size of mesopor es (run)** | **size of silicon grains (nn)** | **Rate discharging capacity/0.2Ccapacity (W)** | | | **Rate charging capacity/0. 2C capacity(%)** | | | **50-week capacity retention rate of 25°C (%)** | **Expansion rate after 50 weeks (%)** |
| | | | | | | | **0.5C** | **1.5C** | **3.0C** | **0.5C** | **1.5C** | **3.0C** | | |
| Example 1 | Mg | 10 | 20 | 1.7 | 20 | <10 | 97 | 74 | 51 | 99 | 91 | 73 | 82 | 113 |
| Example 2 | Mg | 10 | 30 | 1.9 | 25 | <10 | 97 | 81 | 62 | 99 | 93 | 81 | 87 | 111 |
| Examole 3 | Mg0 | 15 | 20 | 1.2 | 14 | <10 | 96 | 65 | 35 | 99 | 91 | 71 | 85 | 110 |
| Examole 4 | LiOH | 12 | 20 | 0.2 | 6 | <10 | 94 | 68 | 41 | 99 | 92 | 75 | 76 | 122 |
| Examole 5 | Ge | 13 | 20 | 2.2 | 29 | <10 | 96 | 75 | 52 | 99 | 94 | 75 | 84 | 115 |
| Comparative **Example 1** | Mg | 12 | 5 | <0.1 | 43 | >10 | 93 | 52 | 26 | 98 | 91 | 63 | 42 | 119 |

**Table 2: Performance parameters of the formed porous negative electrode active material.**

| Table 2: Performance parameters of the formed porous negative electrode active material | | | | | | | | | | | | | | |
|---|---|---|---|---|---|---|---|---|---|---|---|---|---|---|
| | **Raw materia 1 of doping element R** | **Mass percentage of R(%)** | **Tempera ture differe nce (°C)** | **Average pore size of micropo res (nn)** | **Average pore size of mesopor es(nm)** | **size of silicon grains (nm)** | **Rate discharging capacity/0. 2Ccapacity (%)** | | | **Rate charging capacity/0. 2C capacity(%)** | | | **50-week capacity retention rate of 25°C (%)** | **Expansion rate after 50 weeks (%)** |
| | | | | | | | **0.5C** | **1.5C** | **3.0C** | **0.5C** | **1.5C** | **3.0C** | | |
| Example 6 | Mg | 10 | 300 | 1.5 | 17 | <10 | 98 | 75 | 49 | 99 | 94 | 72 | 82 | 114 |
| Example 7 | Mg | 10 | 400 | 1.8 | 22 | <10 | 98 | 85 | 65 | 99 | 96 | 83 | 90 | 110 |
| Examnle 8 | MgO | 15 | 300 | 1.1 | 11 | <10 | 97 | 66 | 33 | 99 | 94 | 73 | 84 | 112 |
| Example 9 | LiOH | 12 | 300 | 0.2 | 4 | <10 | 95 | 69 | 44 | 99 | 95 | 72 | 78 | 120 |
| Example 10 | Ge | 13 | 300 | 2.2 | 19 | <10 | 97 | 76 | 50 | 99 | 97 | 71 | 85 | 116 |
| **Comparative Example 2** | Mg | 12 | 100 | <0.1 | 40 | >10 | 94 | 60 | 29 | 98 | 94 | 65 | 44 | 124 |

Finally, it should be understood that the embodiments of the disclosure disclosed herein are illustrative of the principles of the embodiments of the disclosure. Other modified embodiments are also within the scope of this disclosure. Therefore, the embodiments disclosed in this disclosure are merely examples and not limitations. Those skilled in the art may adopt alternative configurations according to the embodiments in this disclosure to realize the technical scheme in this disclosure. Therefore, the embodiments of this disclosure are not limited to the embodiments accurately described in this disclosure.

## Claims

1. A porous negative electrode active material, comprising:
a first structure comprising 0-4 valence silicon elements and metal doping elements, where the mass percentage of the silicon elements is not less than 40%, and the mass percentage of the metal doping elements is 1%-15%;
the first structure comprises a porous structure, and the porous structure comprises micropores with a pore diameter of less than 2nm and mesopores with a pore diameter of 2nm-50nm;
the first structure further comprises silicon grains, and the size of the silicon grains is no more than 10nm; and
the adsorption-desorption curve of the porous negative electrode active material has a hysteresis loop, the relative pressure corresponding to the hysteresis loop is 0.4-1, and the adsorption capacity is 5cm³/g-25cm³/g.

2. The porous negative electrode active material according to claim 1, wherein in the first structure, 0≤m_{Si(tetravalent)}/m_{Si(zerovalent)}≤1, where the m_{Si(tetravalent)} is the mass of tetravalent silicon element, and the m_{Si(zerovalent)} is the mass of zerovalent silicon element.

3. The porous negative electrode active material according to claim 1, wherein the metal doping elements comprise at least one of Li, Na, Ge, Mg, Ca, Al and Be.

4. The porous negative electrode active material according to claim 1, further comprises a second structure coated on the surface of the first structure, where the second structure comprises at least one of amorphous carbon or graphitized carbon, and the mass of carbon element accounts for not less than 80% of the total mass of the second structure.

5. The porous negative electrode active material according to claim 4, wherein the thickness of the second structure is 0nm-40nm, and the average particle diameter of the porous negative electrode active material is 0.1µm-18µm.

6. A preparation method for a porous negative electrode active material, comprising:
providing a mixture, the mixture comprises a simple substance state of silicon, a tetravalent oxidation state of silicon and a metal doping element, the mass percentage of the silicon element is not less than 40%, and the mass percentage of the metal doping element is 1%-15%;
melting the mixture, and then cooling the mixture to room temperature at a cooling rate of no less than 20°C/min to obtain a first structure;
the first structure comprises a 0-4 valence silicon element and a metal doping element;
the first structure comprises a porous structure, where the porous structure comprises micropores with a pore diameter of less than 2nm and mesopores with a pore diameter of 2nm-50nm;
the first structure further comprises silicon grains, and the size of the silicon grains is no more than 10nm; and
the adsorption-desorption curve of the porous negative electrode active material has a hysteresis loop, the relative pressure corresponding to the hysteresis loop is 0.4-1, and the adsorption capacity is 5cm³/g-25cm³/g.

7. The preparation method according to claim 6, wherein, in the first structure, 0≤m_{Si(tetravalent)}/m_{Si(zerovalent)}≤1, where the m_{Si(tetravalent)} is the mass of tetravalent silicon element, and the m_{Si(zerovalent)} is the mass of zerovalent silicon element.

8. The preparation method according to claim 6, wherein the metal doping elements comprise at least one of Li, Na, Ge, Mg, Ca, Al and Be.

9. The preparation method according to claim 6, further comprises: coating a second structure on the surface of the first structure, where the second structure comprises at least one of amorphous carbon or graphitized carbon, and the mass of carbon element accounts for not less than 80% of the total mass of the second structure.

10. A preparation method for a porous negative electrode active material, comprising:
providing a mixture, where the mixture comprises a simple substance state of silicon, a tetravalent oxidation state of silicon and a metal doping element, the mass percentage of the silicon element is not less than 40%, and the mass percentage of the metal doping element is 1%-15%;
heating the mixture to a first temperature, and then cooling the mixture to a second temperature under a specific vacuum degree, where the temperature difference between the first temperature and the second temperature is not less than 300°C, so as to obtain a first structure;
the first structure comprises a 0-4 valence silicon element and a metal doping element;
the first structure comprises a porous structure, where the porous structure comprises micropores with a pore diameter of less than 2nm and mesopores with a pore diameter of 2nm-50nm;
the first structure further comprises silicon grains, and the size of the silicon grains is no more than 10nm; and
the adsorption-desorption curve of the porous negative electrode active material has a hysteresis loop, the relative pressure corresponding to the hysteresis loop is 0.4-1, and the adsorption capacity is 5cm³/g-25cm³/g.

11. The preparation method according to claim 10, wherein the first temperature is 1000-1400°C, the second temperature is 400-900°C, and the specific vacuum degree is 10⁻³Pa-10²Pa.

12. The preparation method according to claim 10, wherein, in the first structure, 0≤m_{Si(tetravalent)}/m_{Si(zerovalent)}≤1, where the m_{Si(tetravalent)} is the mass of tetravalent silicon element, and the m_{Si(zerovalent)} is the mass of zerovalent silicon element.

13. The preparation method according to claim 10, wherein, the metal doping elements comprise at least one of Li, Na, Ge, Mg, Ca, Al and Be.

14. The preparation method according to claim 10, further comprises: coating a second structure on the surface of the first structure, where the second structure comprises at least one of amorphous carbon or graphitized carbon, and the mass of carbon element accounts for not less than 80% of the total mass of the second structure.
